# EUROPEAN PATENT APPLICATION

(11) **EP 2 816 685 A2**
(43) Date of publication of application: **24.12.2014**
(21) Application number: 14173201.6
(22) Date of filing: 20.06.2014
(51) Int. Cl.: H02G 1/00, H02G 3/00, H02G 3/12

(54) **Method for building a functional module into a wall and assembly therefore**

(30) Priority: 21.06.2013 BE 201300431
(71) Applicant: Niko NV, 9100 Sint-Niklaas (BE)
(72) Inventor: Totté, Lieven, 9140 Elversele (BE); Callebaut, Dries, 9000 Gent (BE)
(74) Representative: D'Halleweyn, Nele Veerle Trees Gertrudis

(57) **Abstract**

The present invention provides a method for building a functional module (21) into a wall. The method comprises in a first step providing a mounting box (10) and an in the mounting box (10) mountable insert part (20) with a via at least one cable (50) connectable functional module (21). The method furthermore comprises mounting the insert part (20) in the mounting box (10); connecting the at least one cable (50) with the functional module (21); closing one open side (13) of the mounting box (10) with a cover (30) or a foil; and building the mounting box (10) with the insert part (20) into a wall.

## Description

The present invention relates to a method for building a functional module, connectable via at least one cable, into a wall, in particular a prefabricated wall. The invention also relates to an assembly with a functional module for building into a prefabricated or prefab wall.

Mounting boxes for building into a wall are known in the art. Such mounting boxes have as an advantage that an electric or electronic function such as a socket, a switch, a network termination point and the like, can be safely built into a wall, whereby the necessary cable connections are realized in the mounting box so that, after building in, only a small volume of the functional part will be outside the volume of the wall itself. Such mounting boxes have, however, the disadvantage that an electrician has to perform a relatively large amount of work on site, such as pulling cables, connecting the cables, mounting the connected functional module in the mounting box, and attaching a cover frame. This requires skilled staff.

Embodiments of the present invention aim at providing a method for building a functional module into a wall. In other words, embodiments of the invention aim at providing a method which allows to manufacture prefabricated walls in which mounting boxes with functional modules are built-in before the walls are brought to the construction site. More particularly, the present invention aims at providing an assembly and method which allow relatively little installation work at the construction site.

According to an aspect of the invention a method is provided for building a functional module into a wall. The method comprises providing a mounting box, and an in the mounting box mountable insert part with a via at least one cable connectable functional module. The insert part is mounted in the mounting box, and the at least one cable is connected to the functional module. Further, an open front end of the mounting box is closed off with a cover or a foil. It has to be noted that this closing off of the front end can, according to embodiments of the invention, can be performed prior to mounting the functional module in the insert part and connecting the cables or can be performed after mounting the functional module in the insert part and connecting the cables. The closing off can also be performed during the manufacture of the mounting box, for example by forming the mounting box in one piece with a cover. The cover can then, for example, be a tear-off cover that comprises a tear or break line. Connecting the at least one cable can further also be performed prior to providing the insert part in the mounting box. After connecting, mounting and closing, the mounting box with the insert part is built into a wall in such a way that the cover or foil is located adjacent a surface of the wall.

A method according to embodiments of the invention is particularly interesting for use in prefabricated walls. Such a method allows for mounting the functional module into the mounting box and connecting the cables at a first location, whereby the open end of the mounting box is or has been covered. It has to be noted that, when the open (front) end is closed, there is an open back end available for mounting the insert part in the mounting box, which open back end is then closed off. The closed mounting boxes with cables can then be transported to a second location where they are moulded in the prefabricated walls. In this way, a prefabricated wall is obtained in which the functional module is already mounted in the mounting box. The prefabricated walls with the closed mounting boxes can then be transported to a construction site. Because the mounting boxes are completely closed, they are protected during transport and storage against damage and/or soaking in of, for example, rain water. At the construction site, the closed end can, after the walls are placed, be opened again, and a cover element and optionally a central plate can be mounted. This work could be carried out by untrained staff and can be done rather quickly. Another advantage is that very little time is required at the construction site for making the functional modules ready for use. For the sake of completeness, it has to be noted that the first and second location could also be the same, and that mounting the insert parts in the mounting box and/or connecting the cables can also happen in the mould.

Building the mounting box into a wall preferably may comprise the steps of providing the closed mounting box in a mould with the cover or foil facing the bottom of the mould; and pouring a wall material in the mould.

When the prefabricated wall is placed at the construction site, the cover or foil may be removed. According to embodiments of the invention, the method may then furthermore, after removing the cover or foil, typically comprise providing a cover element on the insert part. However, it is also possible that the insert part is built into the wall in the finished form and that providing a cover element is no longer required after removing the cover or foil.

According to an advantageous embodiment the mounting box comprises a tubular part with a front end on which the cover or the foil is or has been provided, and an open back end, and a closing part. The at least one cable is preferably connected to the functional module through the open back end, after which the closing part is provided to the open back end. Even more preferably, the at least one cable is provided in one or more cable conduits, and each conduit is provided between the tubular part and the closing part. In comparison with solutions known from the art, where conduits must be pushed through an opening, conduits can now be provided much easier by providing it between the tubular part and the closing part. In addition a conduit is preferably, prior to fitting the closing part, fixed to the tubular part, typically in a cable conduit receiving part which is provided in the open back end, after which one or more cables can be connected. If the conduit is provided with ribs, as is the case for a typical flexible conduit, the conduit can for example be clamped in between two ribs in an adapted cutout in the tubular part.

It is also possible to run conduits through a mounting box without the cables contained therein being connected. The conduits can also be empty, or can just be provided with a pull wire with which a cable can be pulled up to the mounting box on site or in a finished building.

According to a further developed embodiment, a reinforcement may be applied over the mounting boxes, after placing them in a mould. In order to facilitate application of such reinforcement, the mounting box can be provided with a channel on its outer side for receiving a rod of the reinforcement. This outer side can furthermore be provided with alignment means, such as ribs or grooves, to enable proper alignment of the mounting box in the mould. Providing a reinforcement further adds to proper positioning of the mounting box in the mould. The weight of the reinforcement will also ensure that the mounting box is pressed firmly against the bottom of the mould and cannot move while pouring the wall material in the mould.

According to another aspect of the invention, an assembly is provided with a mounting box with an open end, an in the mounting box mountable insert part with a via at least one cable connectable functional module, and optionally a cover element that is mountable on the insert part after building the mounting box into the wall. The assembly further comprises a cover or a foil for closing off the open end. The insert is mountable in the mounting box such that the open end can be closed off by the cover or foil while the insert part is mounted in the mounting box.

An assembly according to the invention allows to provide a functional module in the mounting box prior to building into the wall, whereby the mounting box is closed by a cover or a foil. The thus closed off mounting box can then be placed into a mould whereby the cover or foil faces the bottom of the mould, after which wall material can be poured into the mould. After placing the wall, the cover or foil can be removed and optionally a cover element may be provided to the insert part. According to an embodiment, the insert part may already be finished in which case afterwards no cover element should be provided any more.

It has to be noted that it is also possible to manufacture the mounting box with a cover that forms a single part with the tubular part. Such a cover may typically comprise a tear or break line, along which the cover can be torn off.

The mounting box preferably has a wall provided with a cable conduit receiving part in which a conduit can be provided. This cable conduit receiving part is designed to provide at least one cable that should be connected with the functional module into the mounting box.

The cover element is preferably a cover frame that is so dimensioned that it extends around a part of the functional module when the mounting piece is mounted in the mounting box. According to an advantageous embodiment the cover frame is provided at its back side with a continuous first flange that is dimensioned to fit tightly in the open end of the mounting box and a second continuous flange that is dimensioned to fit tightly around a part of the functional module. Through the use of such flanges it is possible to work with a functional module which is provided slightly recessed in the open end of the mounting box.

According to a possible embodiment, the mounting box and the insert part are designed to position the insert part at least a in a building-in position and in a use position, and to be able to move the insert part from the building-in position to use position. In the use position, the insert part is preferably protruding partly out of the open end of the mounting box so that a cover element is mountable on the insert part. In the building-in position, the insert part preferably does not protrude out of the open end of the mounting box. This has the advantage that the open end can simply be closed off by a cover or a foil.

According to a possible embodiment, the cover is provided with a coupling means for coupling the cover to the insert part, and the coupling means is designed to bring the insert part to a use position when removing the cover. In that way, removing the cover simultaneously facilitates moving the insert part from the building-in position to the use position.

To provide the insert part in the mounting box, the insert part can be provided with at least two positioning elements that can cooperate with a profiling at an inner wall of the mounting box. These positioning elements can for example be spring-loaded lips with external projections that fit into grooves in the inner wall of the mounting box. To further facilitate the insertion of the insert part in the mounting box, guiding elements can be provided to the inner wall of the mounting box.

The functional module is preferably one of the following: an electrical socket, a switch, a network termination point, a TV connection point, a telephone connection point. Instead of an insert part with a functional module, a shut-off plate can also be supplied within the mounting box. More in general, the functional module may be any electrical or electronic module that has to be connected in a wall by means of one or more cables.

According to an advantageous embodiment, the mounting box comprises a tubular part with an open front end and an open back end; and a closing part that can be provided against the open back end. The cover is then mountable to the open front end, or the foil is attached on the open front end. Such a construction of the mounting box has the advantage that the one or more cables can be connected with the functional module through the open back end.

More preferably, the tubular part and the closing part are arranged to tightly enclose one or more conduits therein between. More specifically, the tubular part can be designed to enclose one or more conduits in a clamping way.

According to another further developed embodiment, the mounting box and the insert part are designed to place the insert part in an installation position in which the at least one cable is connectable with the functional module via the open back end of the tubular part. In addition, the mounting box and the insert part are preferably designed such that the insert part can be moved from the installation position to the building-in position. In this way connecting the cables can be performed even faster.

The present invention will be explained by means of a number of, by no means limiting, exemplary embodiments with reference to the attached drawings, in which:
Figures 1A-1G schematically illustrate an embodiment of an assembly and a method according to the invention;
Figures 2A and 2B illustrate dismounted perspective views of a first embodiment of an assembly according to the invention, seen from two sides;
Figures 3A-3C illustrate sections of a mounting box with a functional module in respectively an installation position (figure 3A), a building-in position (also called pouring position) (figure 3B) and a use position (figure 3C);
Figures 4A and 4B show a perspective view of the assembly of figures 2A and 2B in the assembled state, in which the functional module is in the building-in position, and the cover is attached to the mounting box, respectively seen from a back side and a front side;
Figure 5 shows a perspective view of the assembly of figures 2A and 2B in the assembled state, in which the functional module is in the use position and a cover frame is mounted on the mounting box;
Figure 6 shows a perspective detailed view of the functional module in the building-in position, where parts of the mounting box are omitted for clarity reasons;
Figure 7 shows a perspective detailed view of the functional module in the use position, where part of the mounting box is omitted for clarity reasons;
Figures 8A and 8B illustrate a dismounted perspective view of a second embodiment of an assembly according to the invention, respectively seen from a back side and a front side;
Figure 9 shows the assembly of figure 8 in the assembled state, as seen from the back side;
Figure 10 shows the assembly of figure 8 in the assembled state, as seen from the front side; and
Figures 11A and 11B schematically illustrate a third embodiment of an assembly according to the invention.

In the drawings, identical or similar parts in different embodiments are referred to with the same reference numbers.

The present invention provides a method for building a functional module into a wall. The method comprises providing a mounting box and an in the mounting box mountable insert part with a via at least one cable connectable functional module. The method furthermore comprises mounting the insert part in the mounting box; connecting the at least one cable to the functional module; closing an open front side of the mounting box with a cover or a foil; and building the mounting box with the insert part into a wall such that the cover or the foil is located at a surface of the wall.

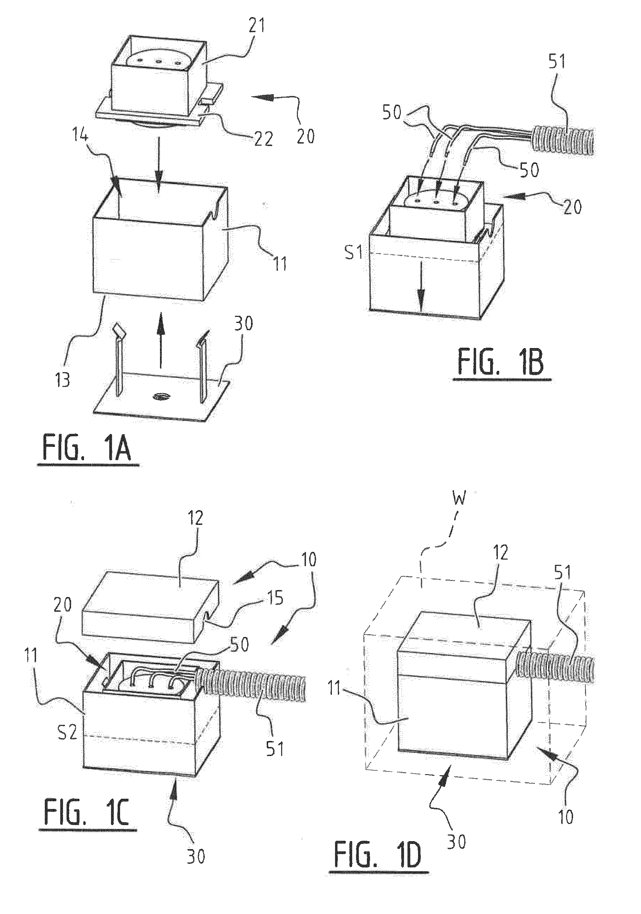

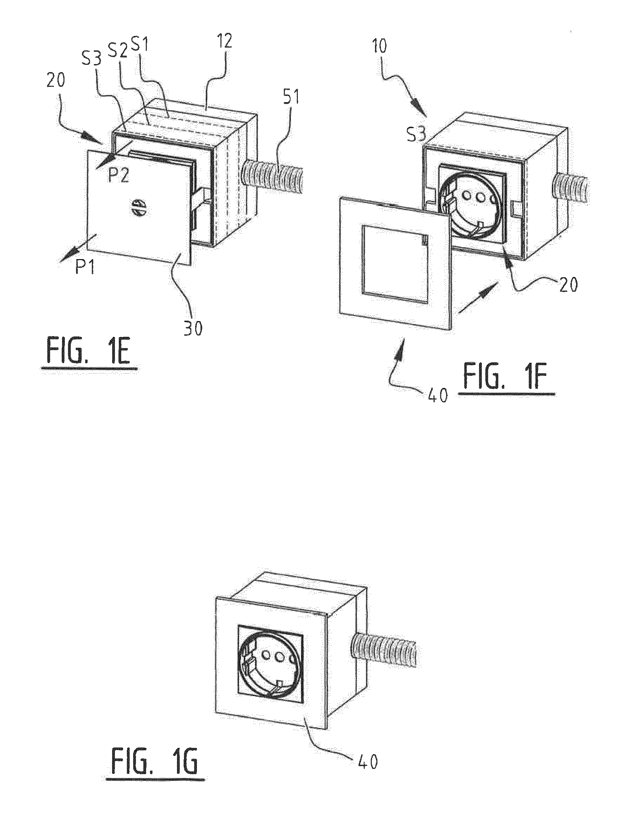

Embodiments of an assembly and a method according to the invention are first schematically illustrated based on figures 1A-1G. The assembly comprises a mounting box 10, an insert part 20 with a via at least one cable 50 connectable functional module 21, a cover 30, and a cover frame 40. The mounting box 10 comprises a tubular part 11 and a closing part 12. The tubular part 11 has an open front end 13 and an open back end 14. The terms "front" and "back" refer to the front side and back side when the mounting box is built into a vertical prefabricated wall W (the position which is illustrated in figures 1E-1G). In the steps illustrated in figures 1A-1D, the open front end 13 is located at the bottom and the open back end 14 is located at the top, because figures 1A-1D show the position when the mounting box 10 is placed in a mould in which the prefabricated wall W is manufactured in a horizontal position.

Figure 1A illustrates the steps of providing a cover 30 on the open front end 13 of the tubular part 11, and providing the insert part 20 via the open back end 14 in the tubular part 11 of the mounting box 10. In addition to the functional module 21, the insert part 20 typically comprises a mounting profile 22 which is adapted to mount the insert part 20 in the tubular part 11. According to a possible embodiment, the insert part 20 is mounted in an installation position S1 in the tubular part 11; see the dotted line in figure 1B that schematically shows the location of the mounting profile 22. In this installation position S1, the cables 50 can easily be connected with the functional module 21, see figure 1B. Typically, first a conduit 51 will be fixed to the tubular part 11 (see also figure 1C), after which the cables 50 are connected. According to another design, the cables 50 may be connected outside the tubular shaped part 11 (and not in the installation position S1), after which the insert part 20 is provided in the tubular part 11 via the open back end 14.

It is noted that the cover 30 should not necessarily be provided in a first step. According to an embodiment, the cover 30 can be provided after connecting the cables 50, or even after completing the step illustrated in figure 1C, see below. Connecting the cables 50 should not necessarily be done via the open back end 14. According to an embodiment, the mounting box 10 can be implemented as a single part with a closed back end 14 (and thus without separate closing part 12) and the cables 50 are connected via the open front end 13, prior to applying the insert part 20 in the mounting box 10. In such an embodiment, the insert part 20 will thus also be provided into the mounting box 10 through the open front end 13.

After connecting the cables 50 the insert part 20 is brought in a building-in position S2, see the dotted line in figure 1C that schematically shows the location of the mounting profile 22. In this building-in position, the insert part 20 is provided deeper in the tubular part 11 in the direction towards the open front end 13 compared to the installation position S1. In this building-in position, the closing part 12 of the mounting box 10 is provided on the tubular part 11, with insertion of the cable conduit 51 in which the cables 50 are provided. This cable conduit 51 can be a flexible cable conduit or a rigid cable conduit. The tubular part 11 and the closing part 12 are preferably designed in such a way that, when providing to closing part 12 onto the tubular part 11, a cable tray 15 is defined for receiving the cable conduit 51. The cover part 12 and the tubular part 11 preferably connect closely to the cable conduit 51, and the tubular part 11 is provided with a cable conduit receiving part in which the cable conduit 51 can be clamped while connecting the cable(s) 50. The cable conduit 51 can hereby, for example, be clamped between two ribs in an adapted cutout or cable tray that is adjacent to the open back end 14, see figure 1C. Although figures 1B and 1C show an installation position which is different from the building-in position, it is also possible to provide a single installation and building-in position, i.e. the installation and building-in position may, according to embodiments of the invention, be the same. According to yet another embodiment, the cables 50 are first connected to the functional module 21, and the insert part 20 is then immediately brought into the in figure 1 illustrated building-in position.

After providing the closing part 12 and the cover 30 the assembled assembly can be placed into the mould, after which a wall material is poured into the mould for forming the prefabricated wall W. It has to be noted that one or more of the steps illustrated in figures 1A-1C may typically be performed at a first location, after which the closed mounting boxes 10 with conduits 51 are transported to a second location where the prefabricated wall is manufactured. However, it is also possible to perform one or more of the steps illustrated in figures 1A-1C directly in the mould prior to pouring the wall material into the mould. When the mounting box 10 is placed in the mould, the cover 30 is facing the bottom of the mould, as the bottom of the mould is adjacent to a surface of the prefabricated wall in which the assembly is to be built in. The conduit 51, which is located at the back side of the mounting box 10, will thus be embedded in the prefabricated wall.

After placing the prefabricated wall at the construction site, the mounting box 10 is oriented in the position illustrated in figure 1E. The cover 30 is hereby flush-mounted with the outer surface of the prefabricated wall. After placing the prefabricated wall at the construction site, the cover 30 can be removed, see arrow P1. According to an advantageous embodiment, removal of the cover 30 simultaneously ensures movement of the insert part 20 from the building-in position S2 to a use position S3, see figures 1E and 1F and arrow P2. In the use position S3 the insert part 20 is partly protruding out of the mounting box 10. In this use position, cover frame 40 is mountable on the insert part 20, as illustrated in figure 1G. As can be seen in figure 1E, the installation position S1, the building-in position (also called transport position) S2 and the use position S3 are three subsequent positions in which the insert part 20 can be positioned, looking from the open back end 14 to the open front end 13 of the tubular part 11.

Although the mounting box 10, the insert part 20, the cover 30, and cover frame 40 are schematically shown in simplified format in figures 1A-1G, a person skilled in the art understands that these elements are provided with the necessary profilings and cutouts to allow attachment of the insert part 20 in the mounting box 10, provision of the cover 30 to the mounting box 10, the mounting of the cover frame 40 on the insert part 20, the provision of the closing part 12 on the tubular part 11, etc. The cover 30 can also be provided with a coupling means for coupling the cover 30 to the insert part 20. The coupling means is preferably designed to pull the insert part 20 from the building-in position to the use position when removing the cover 30 according to the arrows P1, P2 in figure 1E. As illustrated in figures 1F and 1G, the cover frame 40 is so dimensioned that, in the use position of the insert part 20, it extends around a from the mounting box 10 protruding part of the functional module 21 of the insert part 20.

Figures 1A-1G illustrate an insert part 20 with a socket 21 as a functional module. The functional module 21 may, however, also be another functional module that should be connected by means of a cable 50, like for example a switch, a network termination point, a TV connection point, and more generally any electrical or electronic functional module which has to be built into a wall.

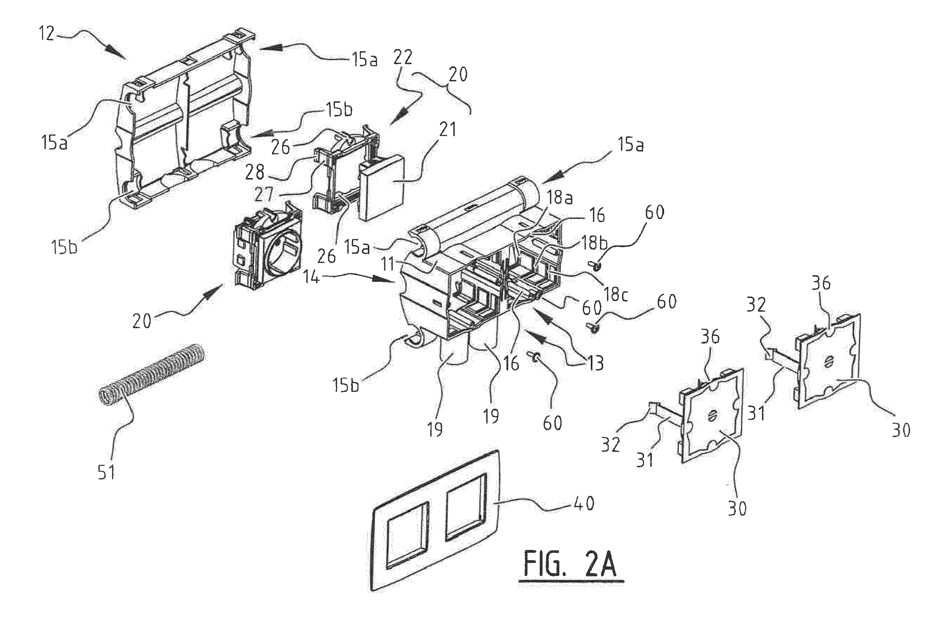

Now a more detailed first embodiment of an assembly according to the invention will be described based on figures 2A-2B, 3A-3C, 4A-4B, 5, 6 and 7. In this first embodiment, the mounting box 10 is intended for building in two functional modules 21. In the illustrated example, the functional modules 21 are a socket and a switch. The mounting box 10 in the first embodiment comprises two tubular parts 11 which have been designed as a single piece, and a closing part 12. A first insert part 20 comprises a mounting profile 22 and a shut-off plate 21. A second insert part 20 comprises a mounting profile 22 and a socket module 21. Each tubular part 11 has an open front end 13 and an open back end 14. The open front end 13 can be closed using a cover 30 or a foil. The rear open end 14 is closed with the closing part 12 of the mounting box 10.

To facilitate mounting of the insert part 20 in the tubular part 11, guiding elements 16, 26 may be provided. These guiding elements 16, 26 comprise a first profiling 16 provided in an inner wall of the tubular part 11 and a complementary profiling 26 provided in the mounting profile 22. The first profiling 16 is here formed as a protruding rounded rib which runs in a longitudinal direction of the tubular part 11 and the second profiling 26 is formed as a receiving channel for this rib. A person skilled in the art understands that many other guiding elements are possible within the framework of the invention.

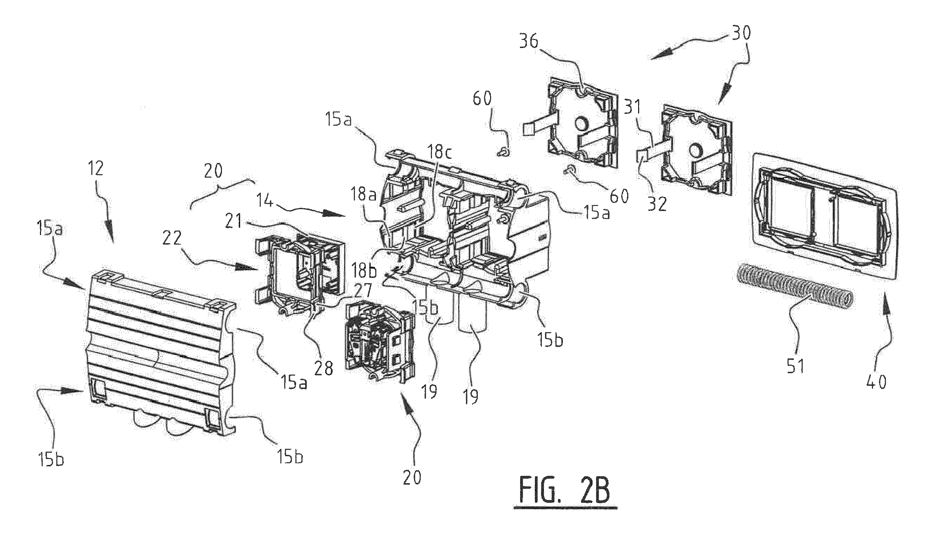

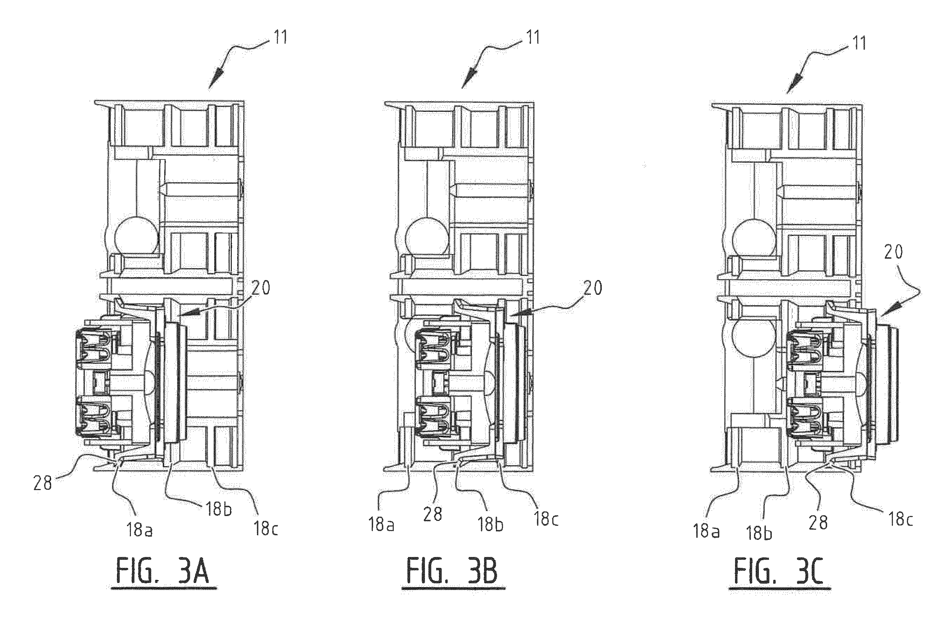

The mounting profile 22 is further provided with four positioning elements 27 which are situated near the four corners of the mounting profile 22. The positioning elements 27 are designed as spring-loaded lips with outwardly protruding thickenings 28 intended for being received in the customized cutouts 18 in the inner wall of the tubular part 11, as can best be seen in figures 2A and 2B, and 3A-3C. In the illustrated embodiment three sets of cutouts 18a, 18b, 18c are provided which correspond to an installation position (18a), a building-in position (18b) and a use position (18c). This ensures that the insert part 20 with the functional module 21 can be positioned into three respective positions, namely an installation position S1, a building-in position (also called transport position or pouring position) S2, and a use position S3, see respectively figures 3A-3C. In the installation position S1, a back side of the functional module 21 protrudes somewhat out of the open back end 14 of the tubular part 11, such that the cables 50 are easy connectable with the functional module 21. As explained with respect to figures 1A-G, connecting the cables 50 can be performed at a first location, after which the insert part 20 is placed in the building-in position S2, the closing part 12 is provided, and the whole can be transported to a second location where the prefabricated walls are then manufactured. According to another embodiment, connecting the cables 50 is performed in the mould before manufacturing the prefabricated wall. The assembled assembly (with insert part 20 in the installation position) is then placed in the mould with the cover 30 facing the bottom. Connecting the cables 50 can thus be performed while the parts 11 are provided in the mould. After connecting the cables 50, the insert part 20 can be pushed downwards in the tubular part 11 to bring the insert part 20 in the building-in position, see figure 3B. In this position, the closing part 12 can be provided on the tubular parts 11.

The one or more cables 50 are typically provided in a rigid or flexible conduit 51 which is, prior to connecting the cables 50, fixed in a conduit receiving part, which is positioned at the open back end 14 of the tubular part 11. After providing the closing part 12, the conduits 51 for the cables 50 are mounted between the closing part 12 and the tubular parts 11. For this, the closing part 12 and the tubular parts 11 are designed such that they define a cable tray 15a, 15b in which a cable conduit 51 can be provided. In the illustrated embodiment, cable trays 15a, 15 are provided on opposite sides of the functional modules 21, in the example given at a top and a bottom of the tubular part 11. However, designs can be thought of in which only one cable tray 15a, 15b is provided. For example, one cable tray 15a can be formed at the top of the functional module 21, or one cable tray 15b can be provided at the bottom of the functional module 21, or one cable tray can be provided in the middle of the functional module 21 (i.e. in between the top and the bottom of the functional module 21). In addition, two additional cable trays 19 can be provided which are directed transversely or perpendicular to the cable trays 15a, 15b. The cable trays 19 are typically intended for receiving rigid conduits 74. Cable trays 15a, 15b are typically intended to realize a connection between a first built-in mounting box 10 and a built-in mounting box 10 at a certain distance from the first built-in mounting box 10, while cable trays 19 are intended to receive cables for connection to a main electricity line. It is also possible to run conduits 51, 74 through a mounting box 10 without the cables 50 present therein being connected. The conduits 51, 74 can also be empty, or just comprise a pull wire with which, at the construction site, a cable 50 can be pulled up to the mounting box 10.

The tubular part 11 may preferably be formed such that the part that defines the cable tray 15a, 15b is designed to tightly contain conduit 51. In that way the one or more conduits 51 can be clamped in the tubular part 11 prior to providing the closing part 12.

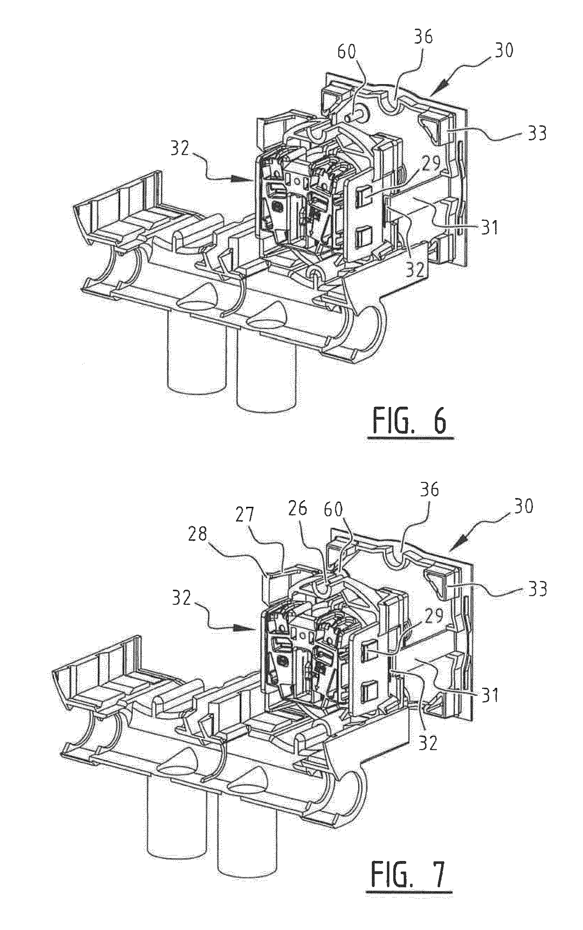

The cover 30 comprises a coupling means 31, 32 for coupling the cover 30 to the insert part 20. The coupling means 31, 32 is designed to simultaneously pull the insert part 20 from the building-in position to the use position when removing the cover 30. For that purpose, the cover 30 may, at its back side, be provided with two arms 31 with snap hooks 32. These snap hooks 32 are meant to cooperate with the insert part 20 when the insert part 20 is in the building-in position, as best illustrated in figure 6. In order to facilitate the provision of the cover 30, the insert part 20 is provided with guiding parts 29 for the arms 31. In the illustrated embodiment, two arms 31 are provided which are intended to extend on both sides of the functional module 21. A person skilled in the art understands that other implementations, for example, with four arms 31, can be thought of. Furthermore, cutouts 36 are provided in the extension of the rounded ribs 16 provided on the inner wall of the tubular part 11. Screw heads 60 fit into the cutouts 36. Further, the bottom of the cover 30 is provided with corner parts 33 close to the corners which corner parts 33 are intended to fit into the corners of the tubular part 11 (see figure 6). The arms 31 with snap hooks 32 are designed such that, on the one side, they are able to move the insert part 20 from the building-in position to the use position, and, on the other hand, after the insert part 20 is brought into the use position, to move along the insert part 20 to completely remove the cover 30, see figure 7. This is further achieved by the presence of screws 60 which ensure that the insert part 20 cannot be pulled out of the tubular part 11, see figures 2A and 2B and figure 7. It has to be noted that instead of screws 60, also an abutment part which is for example formed in one piece with the tubular part 11 can be provided.

The cover 30 is at its front side provided with two cutouts 37 to form a grip in which, for example, a tool can be positioned. In that way the cover 30 can easily be removed. This is just an example and a person skilled in the art understands that other grips or designs can be thought of to enable easy removal of the cover 30.

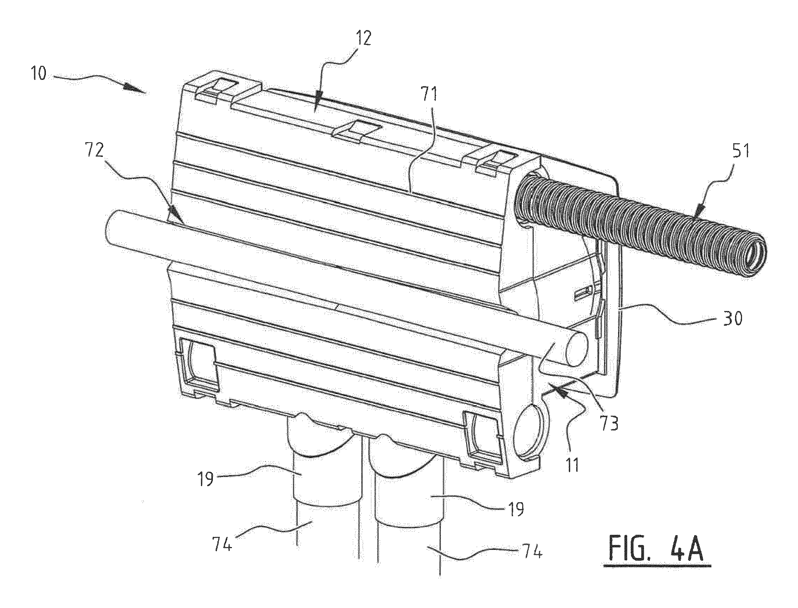

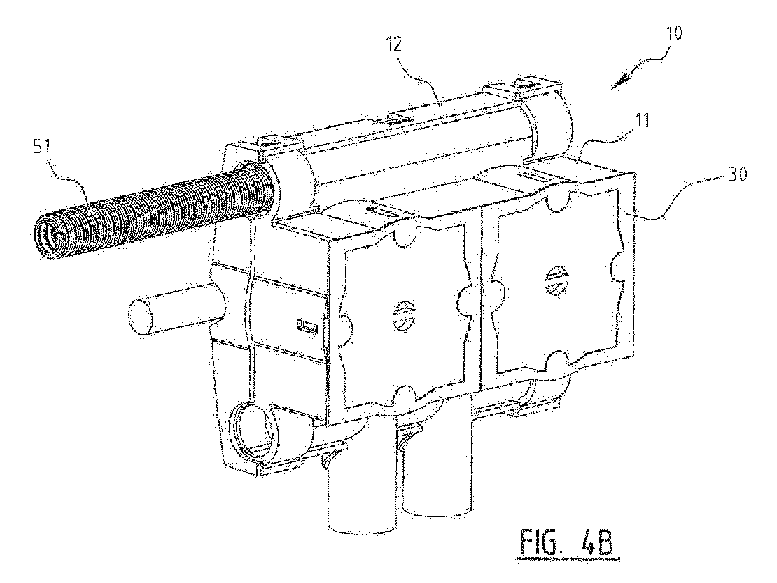

Figures 4A and 4B illustrate the assembly in the assembled state in which covers 30 are provided on the open front end 13 of the mounting box 10. This assembled state can be achieved in a mould. The covers 30 are hereby placed on the bottom of the mould. The closing part 12 can, at its outer back side, be provided with alignment grooves or ribs 71 and a channel 72 for receiving a rod 73 of a reinforcement; see figure 4A. This allows for proper alignment of the assembly in the mould. In the cable trays 19 rigid tubes 74 can be provided. These rigid conduits 74 can be provided at the bottom of the wall using a magnet. In that way the mounting box 10 can further be fixed to the bottom of the mould. The rigid conduits 74 may, for example, be connected to the magnets in such a way that they push the mounting box 10 against the bottom of the mould, thereby ensuring a stable positioning of the mounting boxes 10 in the mould. Also the provision of a reinforcement ensures that the mounting boxes 10 are further pushed against the bottom of the mould.

According to other embodiments, the covers 30 can be provided with a double-sided tape, preferably a tape which, at one side, adheres well to the cover 30 and, on the other side, adheres well to the bottom of the mould. According to an alternative embodiment, a hot-melt adhesive can be provided on the cover 30 to glue the mounting box 10 to the bottom of the mould. According to further developed embodiments not illustrated here, positioning feet, which break off when the mounting box 10 is pressed against the bottom of the mould, can be provided on the covers 30. This makes it possible to, for example, provide double-sided tape to the covers 30 and to then place them at the bottom of the mould without the tape touching the bottom. This allows for proper alignment of the mounting boxes 10 before they are finally fixed to the bottom by pushing the mounting box 10 down, resulting in the positioning feet breaking off, and the mounting box 10 being stuck to the bottom. According to another embodiment, the covers 30 can be provided with glue channels in which glue can be injected. That way glue can be injected after the mounting box 10 has been placed on the mould. These glue channels can be provided in such a way that an installer can easily check when a sufficient amount of glue has been provided in the glue channels.

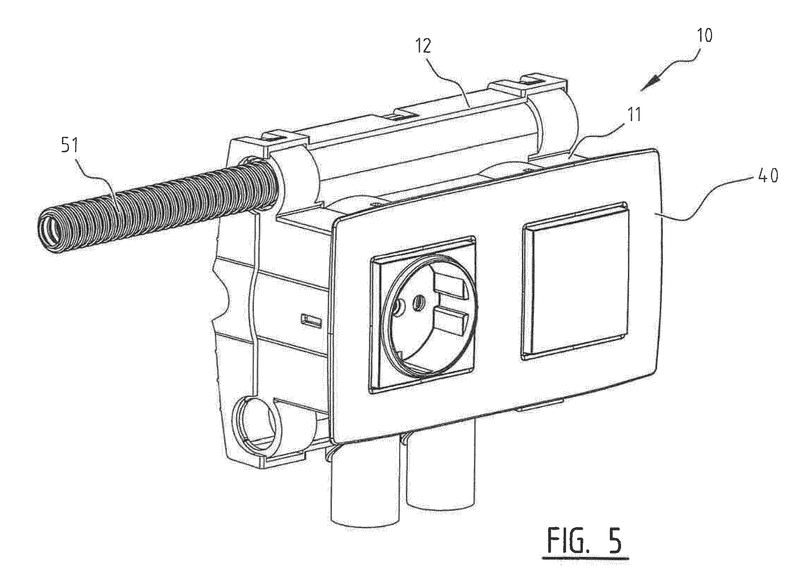

Figure 5 illustrates the assembly of figures 2A and 2B in the assembled state after the covers 30 have been removed and the cover frame 40 has been mounted. The cover frame 40 is preferably simply clickable onto the insert parts 20. Therefore, the insert part 20 is provided with profilings and/or cutouts, allowing a coupling with the back side of the profilings and/or cutouts made in the back side of the cover frame 40. In the illustrated example, the first insert part 20 comprises a shut-off plate 21 which is attached to a mounting profile 22 (the shut-off plate 21 could also be replaced by a switch module), and the cover frame 40 is clickable on the mounting profile 22. The second insert part 20 comprises a socket module 21, a mounting profile 22, and a central plate, and the cover frame 40 is clickable on the central plate, see figures 2A and 2B.

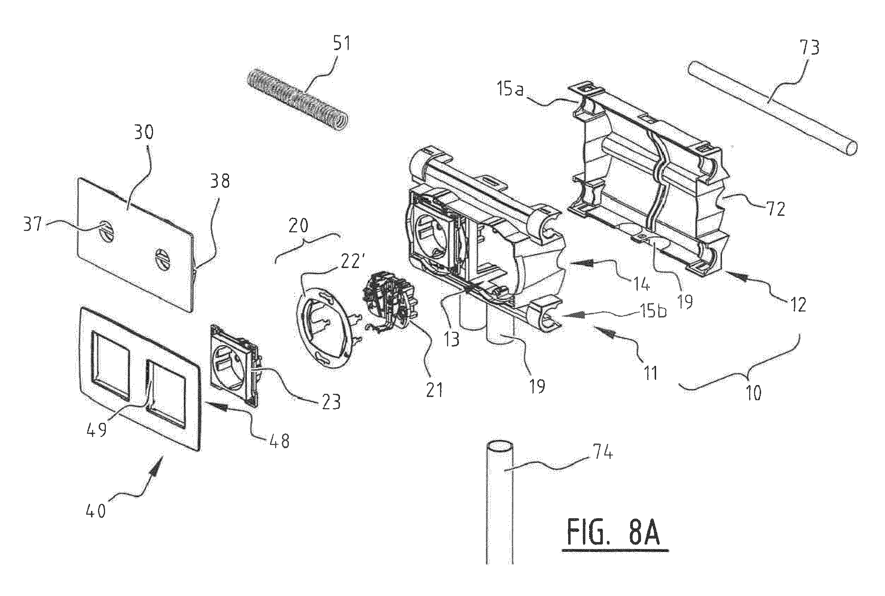

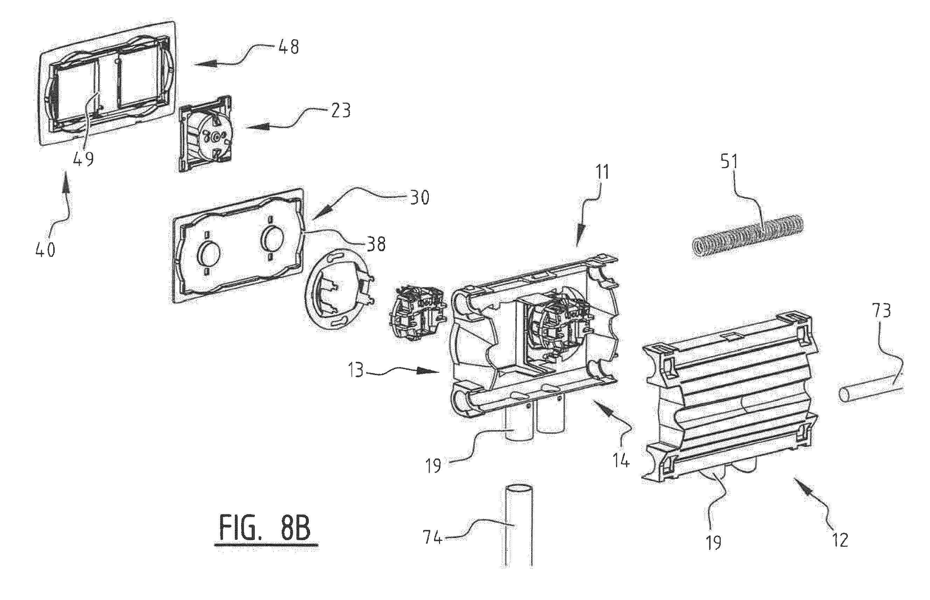

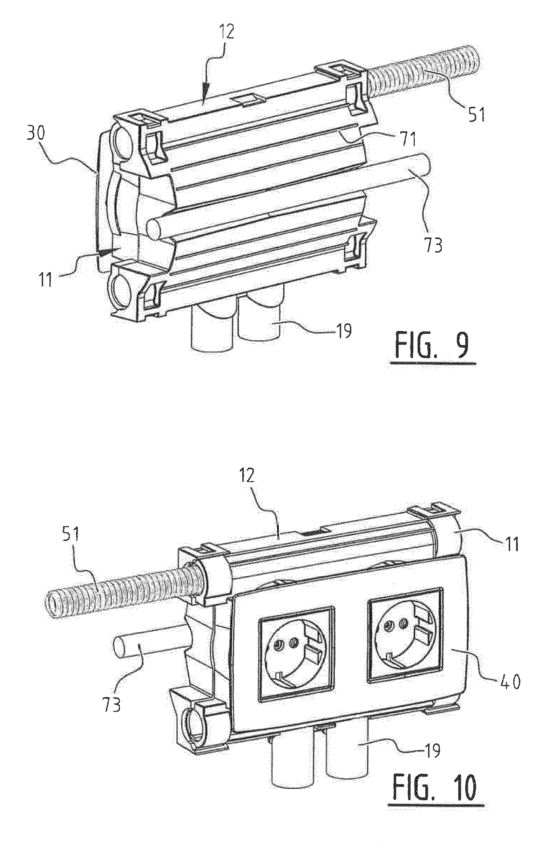

A second embodiment of an assembly will now be described by means of figures 8-10. Also in the second embodiment, the mounting box 10 is intended for building in two functional modules 21. The mounting box 10 comprises two tubular parts 11 which are formed as a single part and a closing part 12. The tubular parts 11 have an open front end 13 and an open back end 14. The insert part 20 with the functional module 21 is provided into the tubular part 11 via the open front end 13. The insert part 20 is, according to this embodiment, mountable in the tubular part 11 in only one position. In the second embodiment, the functional modules 21 are mounted somewhat recessed in the tubular parts 11, without the central plate 23. The cover 30 is, at its back side, designed in such a way that it is mountable on the tubular parts 11. Whereas two covers 30 are provided in the first embodiment, the second embodiment uses only one cover 30. A person skilled in the art understands that this could also be two covers 30. The back side of the cover 30 may in particular be provided with a profiling 38 which is complementary to the shape of the inner wall of the tubular part 11 at the height of the open front end 13. According to this embodiment, the central plate 23 is mounted together with the cover frame 40 after removing the cover 30. The cover frame 40 is at its back side provided with a profiling 48, for example in the form of a flange, which fits in the open front end 13 of the mounting box 10. Also at the level of the inner perimeter of the cover frame 40, a flange 49 is preferably provided at the back side, which connects to an outer edge of the central plate 23. Figures 9 and 10 show the assembly in the assembled state, respectively seen from the back side where the cover 30 is mounted to the front side, and from the front side, where central plates 23 and a cover frame 40 are mounted against the front side. These figures are similar to figures 4A and 5 that were described above, and the comments made with respect to figures 4A and 5 also apply to figures 9 and 10. It has to be noted that the cover frame 40 and central plates 23 can also be formed as a cover element in one piece.

The second embodiment has similar advantages as the first embodiment, with the difference that the insert part 20 is not mountable in different positions. According to yet another embodiment, the insert part 20 is mounted in finished form into the mounting box such that, after removing the cover 30 or foil, no cover elements need to be confirmed any more.

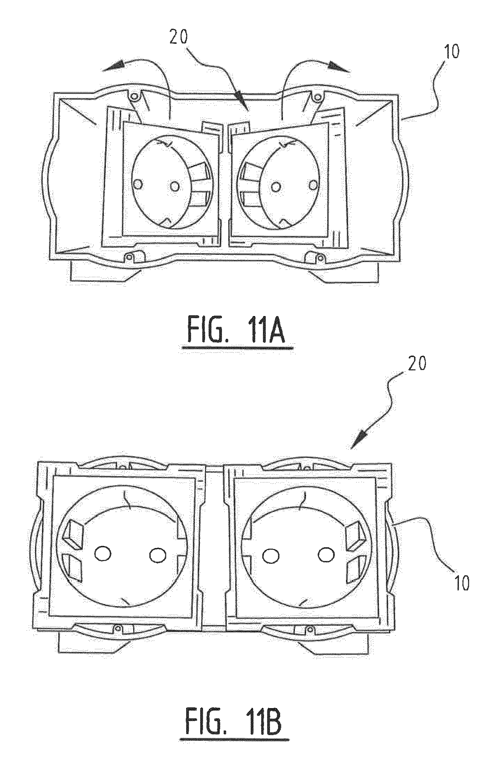

Figures 11A and 11B illustrate a third embodiment of an assembly according to the invention in a building-in position and a use position respectively. In the third embodiment two insert parts 20 are rotatably mounted in a mounting box 10. More specifically, each insert part 20 is hingedly connected to an inner wall of the mounting box 10. In this way the insert parts 20 can be rotated in a first building-in position in which they do not protrude out of the mounting box 10, such that a cover 30 can be provided for closing the mounting box 10. After building the mounting box 10 into a wall, the cover 30 can be removed and the insert parts 20 can be rotated to a use position, see figure 11B, after which a cover frame 40 is mountable on the insert parts 20. The mounting box 10 and the insert parts 20 are preferably designed such that the rotating of the insert parts 20 towards the use position ensures that these insert parts 20 are locked in the use position, which means that they cannot be rotated back to the building-in position. To this end, for example spring-loaded lips can be provided at the top and/or bottom side of the insert parts 20, which spring-loaded lips spring out of the mounting box 10 when the final position is reached.

In the above-described embodiments, the mounting box 10 is always covered with a cover 30. However, it is also possible to cover the mounting boxes 10 with a foil 30 instead of with a cover 30. Such a foil 30 can be provided to the open front end 13 of the mounting box 10 in any way known by a person skilled in the art. It is further also possible to manufacture the mounting box 10 with a cover 30 that is formed as one piece with the tubular part 11. Such a cover 30 is typically provided with a tear or break line, along which the cover 30 can be torn off.

In the illustrated examples, a functional module 21 is always being built into the mounting box 10, and provided with a cover frame 40. However, it is also possible to build the mounting box 10 into a prefabricated wall without the functional module 21, whereby, for example, only a conduit 51 with a pull wire is going through the mounting box 10. In this case a shut-off plate can be provided in the mounting box 10.

The above-described embodiments have the advantage that the functional modules 21 can be easily built into prefabricated walls, whereby, when providing the prefabricated walls at the construction site, only minimal actions are necessary to have the functional modules 21 up and running, resulting in a big time saving at the construction site. The workmen at the construction site merely need to remove the cover or foil 30 and mount a cover frame 40 and/or central plate 23 and/or shut-off plate. In that way, the final assembly of the functional modules 21 can be done by untrained staff and rather quickly. In addition, embodiments of assemblies and methods according to the invention guarantee that the functional modules 21 are well positionable in the walls, by which a very good alignment of the cover frames 40 is obtained when finishing the installation.

The invention is not limited to the above described exemplary embodiments, and a person skilled in the art understands that many modifications can be thought of within the scope of the invention, which is only determined by the following claims.

## Claims

1. Method for building a functional module (21) into a wall, comprising:
providing a mounting box (10), and an in the mounting box (10) mountable insert part (20) with a via at least one cable (50) connectable functional module (21);
mounting the insert part (20) in the mounting box (10);
connecting the at least one cable (50) to the functional module (21);
closing an open front side (13) of the mounting box (10) with a cover (30) or a foil; and
building the mounting box (10) with the insert part (20) into a wall such that the cover (30) or the foil is located at a surface of the wall.

2. Method according to claim 1, **characterized in that** building the mounting box (10) into the wall comprises the following steps:
providing the closed mounting box (10) in a mould with the cover (30) or the foil facing the bottom of the mould; and
pouring a wall material in the mould.

3. Method according to claim 1 or 2, the mounting box (10) comprising a tubular part (11) with a front end (13) and an open back end (14), and a closing part (12), the front end (13) being provided with the cover (30) or the foil, **characterized in that** connecting the at least one cable (50) to the functional module (21) is performed through the open back end (14), and wherein the method thereafter furthermore comprises providing the closing part (12) against the open back end (14).

4. Method according to any of the previous claims, **characterized in that** the method furthermore comprises, before connecting to the functional module (21), providing the at least one cable (50) in one or more conduits (51).

5. Method according to claim 3 or 4, **characterized in that** the method furthermore comprises, before providing the closing part (12) against the open back end (14), providing each conduit (51) between the tubular part (11) and the closing part (12).

6. Method according to any of the previous claims, **characterized in that** the steps of providing a mounting box (10) and an in the mounting box (10) mountable insert part (20) with a via at least one cable (50) connectable functional module (21); mounting the insert part (20) in the mounting box (10); connecting the at least one cable (50) to the functional module (21); and closing an open side (13) of the mounting box (10) with a cover (30) or a foil are performed at a first location.

7. Method according to any of the previous claims, **characterized in that** building the mounting box into a wall is performed at a second location.

8. Method according to claim 6 and 7, **characterized in that** the first location is different from the second location.

9. Method according to claim 6 and 7, **characterized in that** the first location is the same as the second location.

10. Method according to any of the previous claims, **characterized in that** the method, after building the assembly into the wall, furthermore comprises:
placing the prefabricated wall at a construction site,
removing the cover (30) or the foil, and
providing a cover element (40) on the insert part (20).

11. Assembly for building into a wall, especially a prefabricated wall, comprising a mounting box (10), an insert part (20) mountable in the mounting box (10) with a via at least one cable (50) connectable functional module (21), **characterized in that** the assembly further comprises a removable cover (30) or foil for closing an open end (13) of the mounting box (10 and that the insert part (20) can be provided in the mounting box (10) in such a position that the open side (13) can be covered by the cover (30) or the foil while the insert part (20) is mounted in the mounting box (10).

12. Assembly according to claim 11, the mounting box (10) comprising at least one tubular part (11) and a closing part (12), **characterized in that** the at least one tubular part (11) and the closing part (12) are adapted to tightly enclose one or more conduits (51) for receiving the at least one cable (50).

13. Assembly according to claim 11 or 12, **characterized in that** the mounting box (10) and the insert part (20) are adapted to provide the insert part (20) at least in a building-in position and a use position and to be able to move the insert part (21) from the building-in position to the use position, whereby, in the use position, the insert part (21) partly protrudes through the open side of the mounting box (10) so that a cover element (40) can be provided to the insert part (20) and whereby, in the building-in position, the insert part (20) does not protrude through the open side or protrudes less from the open side than in the use position.

14. Assembly according to claim 13, **characterized in that** the cover (30) is provided with a coupling means (31, 32) for coupling the cover (30) to the insert part (20), and that the coupling means (31, 32) is designed to pull the insert part (20) from the building-in position to the use position when removing the cover (30).

15. Assembly according to claim 13 or 14, **characterized in that** the mounting box (10) and the insert part (20) are designed to furthermore place the insert part (20) in an installation position, in which installation position the at least one cable (50) can be connected with the functional module (21) via the open back end (14) of the tubular part (11), whereby the insert part (20) can be brought from the installation position to the building-in position.
